# EUROPEAN PATENT APPLICATION

(11) **EP 1 531 348 A1**
(43) Date of publication of application: **18.05.2005**
(21) Application number: 03025788.5
(22) Date of filing: 11.11.2003
(51) Int. Cl.: G02B 6/255

(54) **Method and device for determining the angular position of polarization-maintaining optical fiber**

(71) Applicant: CCS Technology, Inc., Wilmington, DE 19803 (US)
(72) Inventor: Contag, Karsten, 81373 München (DE); Zamzow, Bert, 82131 Gauting-Buchendorf (DE)
(74) Representative: Epping Hermann & Fischer

(57) **Abstract**

A method for determining the angular position of at least one axial optical asymmetry of a cylindrical body, in particular of an optical fiber, provides for the following steps: the body (4) is illuminated by a light beam (7) and is rotated through an angular interval (α1 - α4) about its longitudinal axis. At a plurality of different angular rotational positions (α) of the body (4), at least a respective value (I) of an intensity of light which has passed through the body is determined. A characteristic value of precision (CT, AA) for the determination of the angular rotational position (α) of the body (4) is selected and the size of an angular rotational step width (Δα) is determined and adjusted dependent on the selected value of precision (CT, AA). A plurality of said light intensity values (I) is analyzed as a function of the angular rotational position (α) of the body (4) to determine the angular rotational position (α) of the body. The invention provides for the possibility of less time needed in an alignment or measurement process.

## Description

The invention is directed to a method and device for determining the angular position of at least one axial optical asymmetry of a cylindrical body, in particular of a polarization maintaining optical fiber. The body is positioned in an arbitrary angular start position about its longitudinal axis, wherein the body is illuminated by a light beam in a direction crossing the longitudinal axis of the body, the light beam comprising light for which portions of the body are transparent. In a subsequent step, the body is rotated through an angular interval. The invention is also directed to a device for determining the angular position of at least one axial optical asymmetry of a cylindrical body, in particular of a polarization maintaining optical fiber.

Optical fibers such as polarization maintaining optical fibers typically comprise two orthogonal axes of symmetry in the cross-sectional plane with respect to the optical properties of the fiber. The two axes of symmetry are arranged perpendicular to the longitudinal axis of the fiber, which is the direction in which light propagates through the fiber. The two axes of symmetry are perpendicular to each other. Thus, a fiber such as a polarization maintaining optical fiber provides for a two-fold symmetry with respect to its optical properties wherein the two axes of symmetry characterize the two polarization modes of linearly polarized light propagating through the fiber. The axis of polarization of each of the two modes is oriented in parallel to either one or the other axis of symmetry.

In order to join two polarization maintaining optical fibers in a splice joint, it is essential to align the axes of symmetry of both fibers in a predetermined way. The commonly used method for aligning two polarization maintaining fibers comprises illumination of both fibers from one side and detecting an intensity signal of light transmitted through the fibers. Both fibers are rotated through an angular interval, in particular through an interval of at least 180°, wherein, at a plurality of different angular rotational positions of the fiber, a respective intensity signal of light transmitted through the fiber is detected. Subsequently, the fibers are aligned with respect to each other according to the information about their angular orientation extracted by analyzing the plurality of light intensity signals as a function of the angular rotational position of the body.

In US 5 850 283 A and EP 0 819 958 A1 methods and devices for the determination of the angular rotational position of axial asymmetries of bodies like optical polarization maintaining fibers are described. The body is illuminated by a light beam in a direction crossing the body, wherein the body is rotated through an angular interval having a first predetermined angular extension being at least half of a full turn from a start angular position about the longitudinal axis. During the rotation, for a predetermined first number of different angular positions, the difference between the light intensity of light, which has passed through the body and in its position corresponds to the central portion of the body as seen in the longitudinal direction, and of light which has passed through the body and in its position corresponds to regions located most close to and outside the central portion of the body are determined. From the determined differences as a function of the rotation angle from the start angular position, at least one characteristic rotation angle interval is determined and evaluated. In a first step, the fibers are aligned roughly by rotating them within an angular interval of at least 180°, wherein the angular rotational step width between two adjacent angular rotational positions of the fiber are rather large. In a subsequent step, the fibers are rotated within an angular interval smaller than the angular interval in the previous step in order to align the fibers in a more precise way, wherein the angular rotational step width between two adjacent angular rotational positions of the fibers is smaller as compared to the angular rotational step width in the previous step. This process can be repeated iteratively to a minimum angular rotational step width.

The precision to which the fibers are angularly aligned mainly depends on the angular rotational step width between two adjacent angular rotational positions of the fibers. That is, a high precision in angular alignment affords a rather small angular rotational step width during the rotation of the fiber through a predetermined angular rotational interval. The prior art commonly applies a fixed angular rotational step width during rotation of the fiber wherein the angular rotational step width is chosen such that a maximum accuracy of alignment is achieved. For state-of-the-art fusion splicers, the alignment accuracy is in the range of less than 1 degree. With alignment of the fibers in a most accurate way, the cross-talk between the two polarization modes is minimized that occurs when light propagates across the splice joint between the two fibers. However, rotating the fibers with the minimum of angular rotational step width between two adjacent angular rotational positions is rather time-consuming.

It is accordingly an object of the present invention to provide a method and a device for determining the angular position of at least one axial optical asymmetry of a cylindrical body, in particular of an optical fiber, which provides for the possibility of less time needed in an alignment or measurement process.

The object is solved by a method for determining the angular position of at least one axial optical asymmetry of a cylindrical body according to claim 1 and by a device for determining the angular position of at least one axial optical asymmetry of a cylindrical body according to claim 12.

According to the invention, the method for determining the angular position of a cylindrical body, as described with respect to the background of the invention hereinbefore, provides for the additional step of selecting a characteristic value of precision for the determination of the angular rotational position of the body. The size of the angular rotational step width between two adjacent angular rotational positions of the body is determined and adjusted dependent on the selected value of precision. Thus, the method according to the invention provides for the possibility of a variable angular rotational step width, in particular used for rotational alignment of two polarization maintaining fibers, which is determined and adjusted dependent on the desired precision of alignment.

Thus, a fusion splicer in accordance with the present invention allows an operator to select the required precision of alignment and, e.g., automatically adapts and adjusts the angular rotational step width applied during rotational alignment of two optical fibers dependent on the selected value of precision. For most applications, it is not necessary to align two optical fibers with maximum achievable precision or accuracy, rather the respective precision of alignment is defined by the application or fusion splicer itself. Thus, according to the invention, in order to reduce the time needed for alignment, the angular rotational step width is not fixed to a minimum value, it is rather flexibly adjustable dependent on the selected precision or accuracy of alignment. Thus, with respect to applications with reduced precision of alignment required less time is needed in an alignment or measurement process, as the angular rotational step width between two adjacent angular rotational positions is increased.

The invention is applicable in general for aligning any two optical fibers or optical elements of substantially cylindrical shape which contain at least one axial optical asymmetry with respect to the longitudinal axis of the body. Exemplary kinds of fibers are fibers with two or more cores, fibers with eccentric cores, and photonic crystal fibers. Moreover, the invention is also applicable for angular alignment of only one optical fiber with respect to a predetermined angular orientation. In particular, the invention is suitable for angular alignment of an optical fiber with respect to another optical element which is not of circular shape or symmetry, such as a laser.

Accordingly, in a preferred embodiment of the invention, the method is employed to determine and to position the cylindrical body with respect to another optical element, in particular to another optical fiber, followed by the subsequent step of connecting the body to said another optical element.

The invention is also applicable in a measurement process in which two connected fibers or, more generally, two connected optical elements are rotated through an angular rotational interval to measure the alignment quality of the joint. Such measurement is taken, e.g. in order to determine the cross-talk between polarization modes at the splice joint which is in direct relation to the angular offset of the optical asymmetries of the two optical elements. In the prior art, such measurement is taken by simultaneously rotating the two connected optical elements applying a fixed angular rotational step width. The accuracy to which the angular offset and thus the polarization cross-talk of the spliced joint can be determined, is related to the angular rotational step width in the same way as described above with respect to the angular alignment of two fibers to be connected.

A fusion splicer in accordance with the present invention is preferably designed to adapt the angular rotational step width automatically in accordance with the required precision or accuracy of angular offset measurement or polarization cross-talk measurement, respectively, wherein the required precision or accuracy may be selected by the operator of the machine.

Further preferred embodiments of the invention are disclosed in the respective dependent claims.

The invention will now be described by way of non-limiting embodiments with reference to accompanying drawings, in which:
- Figure 1: shows a cross-sectional view illustrating an arrangement for illuminating an optical fiber and for determining the angular position of the optical fiber,
- Figure 2: shows a schematic view of an arrangement for splicing two optical fibers by means of an electric arc,
- Figure 3: shows diagrams of fiber transmission intensity distribution functions for different respective angular rotational positions of a polarization-maintaining fiber,
- Figure 4: shows a diagram of the total number of rotating steps needed for angular alignment of two optical fibers as a function of a required maximum accuracy of polarization cross-talk of the joint between the fibers,
- Figure 5: shows a diagram of the total number of rotating steps needed for angular alignment of two optical fibers as a function of a required minimum angular accuracy of the joint between the fibers.

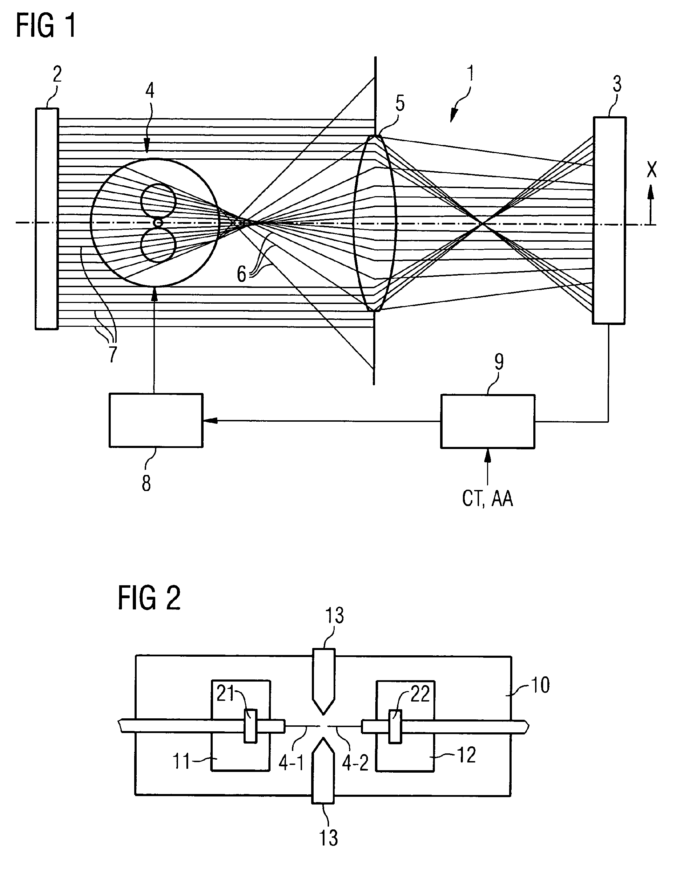

Figure 1 shows a cross-sectional view illustrating schematically an arrangement 1 for illuminating an optical fiber 4 and for determining the angular position of the fiber 4. The arrangement provides for a light source 2 positioned to illuminate the fiber 4 with a light beam 7 in a direction approximately perpendicular to the longitudinal axis of the fiber, the light beam comprising light for which portions of the fiber are basically transparent. The light which is transmitted through the fiber 4 is detected by a CCD camera 3 which, in combination with an optical system placed in front of the camera, is termed as an imaging system in the following description. For example, the optical system placed in front of the camera 3 provides for a stop and/or lens 5 for focusing light 6 which is transmitted through the fiber 4.

The optical system is adjusted in such that the intensity distribution recorded by camera 3 (which corresponds to light transmitted through the fiber and the subsequently arranged stop/lens 5 of the imaging system) shows distinct features that change when the fiber is rotated about its longitudinal axis which runs approximately perpendicular to the axis of the light beam 7. Reference numeral 8 denotes means (shown only schematically for simplicity purposes, such means are well known in practice) for positioning the fiber 4 in an arbitrary angular start position about its longitudinal axis and for rotating the fiber 4 through an angular interval. Reference numeral 9 denotes means (such as a computer system or data processing hardware) for determining (in cooperation with the optical system) a respective one of the distribution functions, and for analyzing a plurality of said distribution functions thereby processing a series of subsequent calculating steps. The means 9 are connected to the positioning means 8 for controlling a rotating movement of the fiber 4.

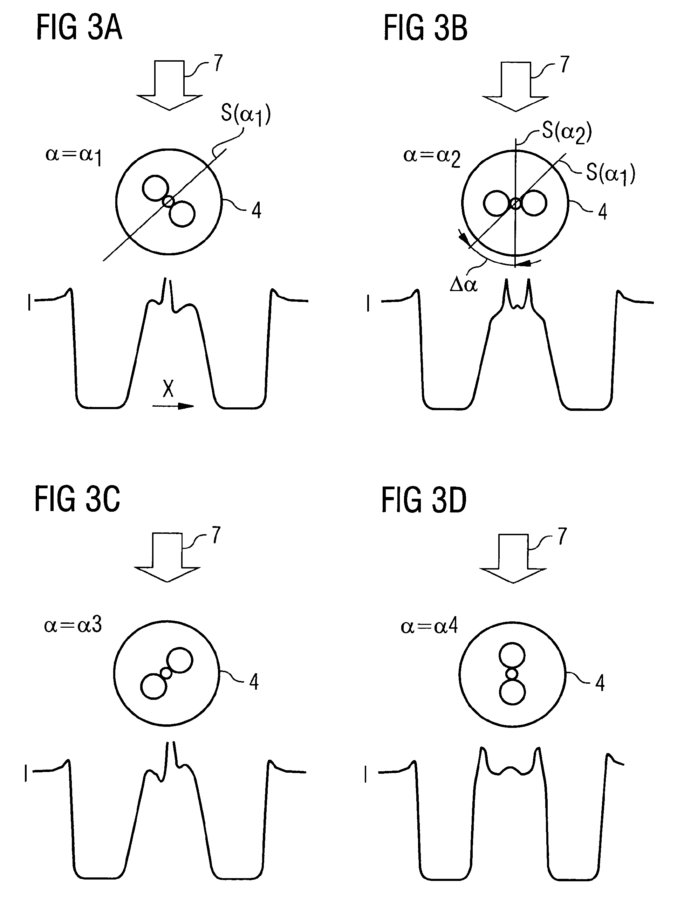

Exemplary diagrams showing fiber transmission intensity distributions captured by camera 3 along the direction X perpendicular to the longitudinal axis of the fiber are shown in figure 3 for different angles α of rotation of the optical fiber 4. An intensity distribution function can be determined either by taking values of the intensity along a single column X of the CCD camera 3 wherein the column X is oriented approximately perpendicular to the longitudinal axis of the fiber. Alternatively, a plurality of columns of the camera may be used for taking average values along a direction which is oriented substantially in parallel to the longitudinal axis of the fiber. As can be seen from figure 3a to figure 3d, the imaging system is adjusted in such that the intensity signals denoting the intensity of light which passed through the fiber in a central region of the fiber (which is termed herein as fiber transmission intensity distribution function) change with different angular rotational positions of the optical asymmetries of the fiber, i.e. the transmission intensity distribution function changes its shape with different angular rotational positions of the fiber. By analyzing the shape of a plurality of transmission intensity distribution functions, the angular orientation of the optical asymmetries may be determined as follows:

The fiber 4 is positioned in an arbitrary angular start position α = α1 about its longitudinal axis, wherein the fiber 4 is illuminated by light beam 7 in a direction approximately perpendicular to the longitudinal axis of the fiber. As can be seen from figure 3a through figure 3d, the fiber 4 is rotated through the angular interval α1 - α4. At the different angular rotational positions α1 through α4, a respective distribution function I of the intensity of light which has passed through the fiber in the direction X perpendicular to the longitudinal axis of the fiber 4 is determined. Two adjacent angular rotational positions of the plurality of different angular rotational positions α of the fiber 4 with respect to its symmetry axis S, e.g. α1 and α2 of the symmetry axis S in figures 3a, 3b, enclose an angular rotational step width Δα having a determined size.

As can be seen from figure 3, especially two angular rotational positions of the optical asymmetries of the fiber 4 exist which are characterized by a respective distribution function I having a high degree of symmetry. Accordingly, these two angular positions can be found by analyzing the plurality of distribution functions I as a function of the angular rotational position of the fiber.

For most applications, it is not necessary to align two optical fibers with a maximum level of precision. Thus, in accordance with the present invention, an operator may select a characteristic value of precision for the determination of the angular rotational position α of the fiber 4. The size of the angular rotational step width Δα is determined and adjusted dependent on the selected value of precision. In a preferred embodiment, the size of the angular rotational step width Δα is determined and adjusted automatically as a function of the selected value of precision.

According to one embodiment of the invention, the value of precision for the determination of the angular rotational position α of the fiber 4 is a maximum accuracy of polarization cross-talk between polarization modes of the fiber and another optical element to which the fiber is connected. According to another embodiment of the invention, the value of precision for the determination of the angular rotational position of the fiber 4 is a required minimum angular accuracy.

According to a preferred embodiment, a fusion splicing arrangement is used which employs more than one imaging system such as that shown in figure 1 (reference numerals 2, 3, 5) to illuminate the fiber 4 from multiple directions. The imaging systems are positioned to each other enclosing an angle between the different directions, in particular enclosing an angle of 90°. The imaging systems are operated to combine data obtained with each of the imaging systems. Consequently, the fibers are rotated only within an angular interval of 90° in order to detect respective values of an intensity of light within an angular interval of 180°.

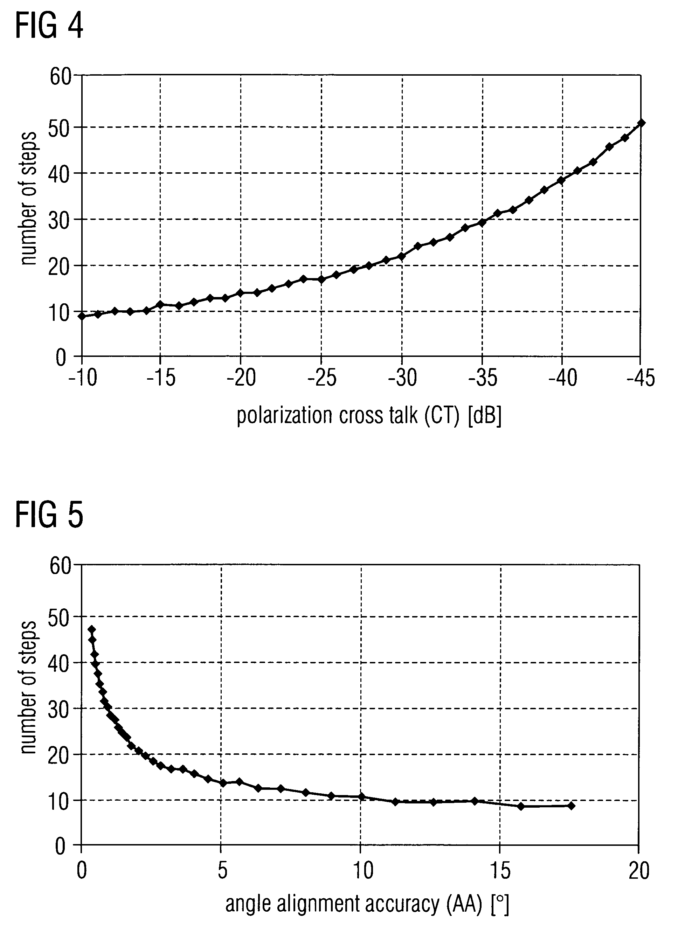

For such fusion splicing arrangement, figure 4 shows a diagram of the total number of rotating steps needed for the angular alignment of two cylindrical bodies, e.g. two polarization maintaining optical fibers, as a function of the required maximum accuracy of polarization cross-talk CT of the joint between the fibers. In figure 4, an alignment process is reflected which comprises two separate process steps as set forth hereinbelow in more detail.

In a first process step, at a first plurality of different angular rotational positions α of the fiber 4, a respective first value of an intensity of light which has passed through the fiber is determined, such as a respective distribution function I as described with respect to figure 3. This way, a first angular rotational position α of the fiber 4 is determined. In a following second step, at a second plurality of different angular rotational positions α of the fiber 4, a respective second value of an intensity of light which has passed through the fiber is determined in order to determine a second, more accurate angular rotational position α of the fiber.

Preferably, two first adjacent angular rotational positions such as α1 and α2 of the first plurality of different angular rotational positions α of the fiber 4 enclose a first angular rotational step width Δα having a first size. In the second process step, two second adjacent angular rotational positions such as α1 and α2 of the second plurality of different angular rotational positions α of the fiber 4 enclose a second angular rotational step width Δα having a second size. Here, the second size of the second angular rotational step width Δα in the second process step is determined and adjusted as a function of the selected value of precision. In particular, the second size of the second angular rotational step width Δα in the second process step is smaller than the first size of the first angular rotational step width Δα in the first process step.

According to figure 4, the cross-talk CT between the two polarization modes (given in decibel) is used as a measure for the precision of alignment between the two polarization maintaining optical fibers. In figure 5, a diagram of the total number of rotating steps needed for angular alignment of two optical fibers is shown as a function of the required minimum angular accuracy AA of the joint between the fibers. Figures 4 and 5 reflect the same alignment process employing two different process steps as described hereinabove. For example, when employing two imaging systems enclosing an angle of 90° as described above, the fibers are rotated in the first process step through an angular interval of 90° and the angular alignment positions are determined roughly from the data taken. In the second process step, the fibers are rotated through the second interval with its center placed on an angular alignment position determined in the first process step; i.e. the fibers are rotated around the roughly determined angular alignment position of the first process step within the second angular interval which is twice the angular rotational step width during the first process step. The angular rotational step width in the second process step is determined by the desired accuracy of angular alignment, whereas the angular rotational step width of the first process step is determined and adjusted in such that a minimum total number of steps is employed.

As apparent from figures 4 and 5, roughly 30 steps of rotation, i.e. 30 different angular rotational positions of the fiber, are necessary in order to achieve a precision or accuracy of angular alignment of 1 degree which corresponds to a state-of-the-art polarization cross-talk of -35 dB. The number of rotating steps, i.e. the number of different angular rotational positions of the fiber, can be reduced to only 15 if the required maximum accuracy of polarization cross-talk is reduced to -20 dB, which is sufficient for a high number of applications. Since the number of rotating steps is approximately proportional to the time needed for rotational alignment of the fibers, a significant time reduction is achieved, in the previously mentioned example almost to a factor of 2.

Figure 2 shows a schematic view of an exemplary arrangement for splicing two optical fibers 4-1 and 4-2 by means of an electric arc discharge. In the splicing process, in a first step the two fibers 4-1, 4-2 are placed adjacent each other with the portions to be fused together having the buffer layers thereof removed as shown. The fibers are held together at the ends of the to be fused region by grippers 21, 22. In a subsequent step, an electric arc between the discharge electrodes 13 is used to directly heat the fibers. The grippers 21, 22 are mounted individually on blocks 11 and 12 on a support 10.

According to one embodiment of the invention, the method as described hereinbefore referring to fiber 4 is employed to determine and to position the fiber 4-1 of figure 2 with respect to the optical fiber 4-2. Subsequently the fibers 4-1 and 4-2 are connected and fusion spliced. According to another embodiment of the invention, the fibers 4-1 and 4-2 have been previously fusion spliced. Here, the method as described hereinbefore referring to fiber 4 is employed in a measurement process to determine the position of the fiber 4-1 with respect to fiber 4-2 to which fiber 4-1 is connected. Such method may be applied to measure the alignment quality of the joint. Such measurement is taken, e.g. in order to determine the cross-talk between polarization modes at the splice joint which is in direct relation to the angular offset of the optical asymmetries of the two optical fibers.

According to figure 1, the required maximum accuracy of polarization cross-talk CT or the required minimum angular accuracy AA is entered into means 9 which subsequently determines and adjusts the size of the angular rotational step width dependent on the respective value CT or AA. The data processing or computer system means 9 comprise characteristic providing means for providing a characteristic representing the size of the angular rotational step width Δα dependent on the required maximum accuracy of polarization cross-talk CT and/or dependent on the required minimum angular accuracy AA, respectively.

The different size of the angular rotational step width Δα is reflected in figures 4 and 5 by the respective different number of rotating steps. A high number of rotating steps corresponds to a rather small size of an angular rotational step width and vice-versa. It is to be noted that, instead of determining the required angular rotational step width Δα automatically by means 9, the step width can also be determined by the user of the fusion splicer (for example by use of respective tables providing respective characteristics) so that the angular rotational step width is set by the user manually subsequent to selecting the required accuracy of alignment.

## Claims

1. Method for determining the angular position of at least one axial optical asymmetry of a cylindrical body, in particular of an optical fiber, providing the steps of:
- positioning the body (4) in an arbitrary angular start position (α1) about its longitudinal axis,
- illuminating the body (4) by a light beam (7) in a direction crossing the longitudinal axis of the body, the light beam comprising light for which portions of the body are transparent,
- rotating the body (4) through an angular rotational interval (α1 - α4),
- determining, at a plurality of different angular rotational positions (α) of the body (4), at least a respective value (I) of an intensity of light which has passed through the body,
- wherein two adjacent angular rotational positions (α1, α2) of the plurality of different angular rotational positions (α) of the body (4) enclosing an angular rotational step width (Δα) having a determined size,
- analyzing a plurality of said values (I) of an intensity of light as a function of the angular rotational position (α) of the body (4) to determine the angular rotational position (α) of the body,
**characterized by**
- selecting a characteristic value of precision (CT, AA) for the determination of the angular rotational position (α) of the body (4),
- determining and adjusting the size of said angular rotational step width (Δα) dependent on the selected value of precision (CT, AA).

2. The method according to claim 1,
**characterized by**
- in a first process step, determining, at a first plurality of different angular rotational positions (α) of the body (4), a respective first value (I) of an intensity of light which has passed through the body, to determine a first angular rotational position (α) of the body,
- in a following second step, determining, at a second plurality of different angular rotational positions (α) of the body (4), a respective second value (I) of an intensity of light which has passed through the body, to determine a second, more accurate angular rotational position (α) of the body.

3. The method according to claim 2,
**characterized by**
- two first adjacent angular rotational positions (α1, α2) of the first plurality of different angular rotational positions (α) of the body (4) enclosing a first angular rotational step width (Δα) having a first size,
- two second adjacent angular rotational positions (α1, α2) of the second plurality of different angular rotational positions (α) of the body (4) enclosing a second angular rotational step width (Δα) having a second size,
- selecting the value of precision (CT, AA) for the determination of the angular rotational position (α) of the body (4),
- determining and adjusting the second size of said second angular rotational step width (Δα) as a function of the selected value of precision (CT, AA).

4. The method according to claim 3,
**characterized in, that**
the second size of said second angular rotational step width (Δα) is smaller than the first size of said first angular rotational step width (Δα).

5. The method according to claim 3 or 4,
**characterized by**
determining and adjusting the first size of said first angular rotational step width (Δα) in such that a minimum number of the first and second plurality of different angular rotational positions (α) of the body (4) in total is employed.

6. The method according to any one of claims 1 to 5,
**characterized b**y
determining and adjusting the size of said angular rotational step width (Δα) automatically as a function of the selected value of precision (CT, AA).

7. The method according to anyone of claims 1 to 6,
**characterized by**
- employing more than one imaging system (2, 3, 5) to illuminate the body (4) from multiple directions, which are positioned to each other enclosing an angle between the different directions, in particular enclosing an angle of 90 degrees,
- operating the imaging systems to combine data obtained with each of the imaging systems.

8. The method according to anyone of claims 1 to 7,
**characterized by**
- employing the method to determine and to position the body (4, 4-1) with respect to another optical element (4-2), in particular to another optical fiber, and
- subsequently connecting said body to said another optical element.

9. The method according to anyone of claims 1 to 7,
**characterized by**
employing the method to determine the position of the body (4, 4-1) with respect to another optical element (4-2), in particular to another optical fiber, to which the body is connected.

10. The method according to claim 8 or 9,
**characterized in, that**
the value of precision for the determination of the angular rotational position (α) of the body (4) is a required maximum accuracy of polarization cross-talk (CT) between polarization modes of said body and said another optical element.

11. The method according to anyone of claims 1 to 9,
**characterized in, that**
the value of precision for the determination of the angular rotational position (α) of the body (4) is a required minimum angular accuracy (AA).

12. A device for determining the angular position of at least one axial optical asymmetry of a cylindrical body, in particular of an optical fiber, comprising:
- means (8) for positioning the body (4) in an arbitrary angular start position (α1) about its longitudinal axis,
- means (2) for illuminating the body (4) by a light beam (7) in a direction crossing the longitudinal axis of the body, the light beam comprising light for which portions of the body are transparent,
- means (8) for rotating the body (4) through an angular rotational interval (α1 - α4),
- means (3, 5, 8, 9) for determining, at a plurality of different angular rotational positions (α) of the body (4), a respective value (I) of an intensity of light which has passed through the body, wherein two adjacent angular rotational positions (α1, α2) of the plurality of different angular rotational positions (α) of the body (4) enclosing an angular rotational step width (Δα) having a determined size,
- means (9) for analyzing a plurality of said values (I) of an intensity of light as a function of the angular rotational position (α) of the body to determine the angular rotational position (α) of the body,
**characterized by**
- means (9) for selecting a characteristic value of precision (CT, AA) for the determination of the angular rotational position (α) of the body (4),
- means (9) for determining and adjusting the size of said angular rotational step width (Δα) dependent on the selected value of precision (CT, AA).

13. The device according to claim 12,
**characterized in, that**
the means (9) for determining and adjusting the size of said angular rotational step width (Δα) comprise characteristic providing means for providing a characteristic representing the size of the angular rotational step width (Δα) dependent on a required maximum accuracy of polarization cross-talk (CT) between polarization modes of said body (4, 4-1) and another optical element (4-2) connected to said body.

14. The device according to claim 12 or 13,
**characterized in, that**
the means (9) for determining and adjusting the size of said angular rotational step width (Δα) comprise characteristic providing means for providing a characteristic representing the size of the angular rotational step width (Δα) dependent on a required minimum angular accuracy (AA).
